# EUROPÄISCHE PATENTSCHRIFT

(11) **EP 1 754 629 B1**
(45) Veröffentlichungstag und Bekanntmachung des Hinweises auf die Patenterteilung: **08.04.2009**
(21) Anmeldenummer: 06016413.4
(22) Anmeldetag: 07.08.2006
(51) Int. Cl.: B60P 7/08

(54) **Vorrichtung zum Verankern von Ladegütern im Kraftfahrzeug**
Device for securing loads in vehicle
Dispositif de retenue de chargement pour un véhicule automobile

(30) Priorität: 15.08.2005 DE 202005012945 U
(43) Veröffentlichungstag der Anmeldung: 21.02.2007
(73) Patentinhaber: YMOS GmbH, 55743 Idar-Oberstein (DE)
(72) Erfinder: Kley, Frank, Dipl.-Ing., 55767 Gimbweiler (DE); Buschmeier, Konrad, Dipl.-Ing., 33154 Salzkotten (DE)
(74) Vertreter: Ostermann, Thomas

(56) Entgegenhaltungen:
- EP-A- 1 123 838
- EP-A- 1 481 844
- EP-A- 1 555 445
- WO-A-20/06131270
- DE-U1- 20 204 413
- DE-U1-7202004 003 23

## Beschreibung

Die Erfindung betrifft eine Vorrichtung zum Verankern von Ladegütern, Bändern oder dergleichen in Kraftfahrzeugen nach dem Oberbegriff des Patentanspruchs 1.

Aus der DE 20 2004 003 237 U1 ist eine Vorrichtung zum Verankern von Ladegütern oder der dergleichen in Fahrzeugen bekannt, bei der eine Verankerungsöse mittels einer mehrere Verbindungsteile umfassenden Verbindungseinheit an einem rahmenartigen Grundkörper befestigt ist. Die Verbindungseinheit umfasst als Verbindungsteile zum einen ein Einlegeteil mit Gelenköffnungen, des Weiteren einen Schwenkbolzen, der in den Gelenköffnungen des Einlegeteils gelagert ist, so dass die Verankerungsöse um eine horizontale Achse schwenkbar ist, sowie ein drittes Verbindungsteil, das zwischen den Gelenköffnungen des Einlegeteils gelagert ist zur Feststellung der Verankerungsöse in einer vorgegebenen Verstellposition. Mittels des in dem Einlegeteil mit Spiel gelagerten Schwenkbolzens ist die Verankerungsöse um eine horizontale Verschwenkachse schwenkbar zu dem rahmenartigen Grundkörper gelagert. Nachteilig weist die bekannte Verankerungsvorrichtung eine Mehrzahl von Einzelteilen auf, die erst an dem vorgesehenen Einsatzort (Kofferraum des Kraftfahrtzeugs) durch Verschraubung miteinander und mit einem Karosserieteil des Kraftfahrzeuges verbunden werden können. Hierdurch entsteht ein relativ großer Montageaufwand.

Aus der DE 20 2004 020 091 U1 ist zur Reduzierung des Montageaufwandes eine Vorrichtung zum Verankern von Ladegütern und dergleichen in Kraftfahrzeugen vorgesehen, die lediglich aus einem einzigen Bauteil besteht. Das Bauteil weist V-förmige Verankerungsschenkel auf, um ein unterschiedlich orientiertes Eingreifen von Bändern, Schnallen oder dergleichen zu ermöglichen. Da die bekannte Verankerungsvorrichtung jedoch keine schwenkbare Verankerungsöse aufweist, ist die Variabilität der Verankerungsvorrichtung begrenzt.

Aus der DE 202 04 413 U1 ist eine Vorrichtung zum Verankern von Bändern und dergleichen bekannt, die einen rahmenartigen Grundkörper und eine verschwenkbar über eine Verbindungseinheit mit demselben gelagerte Verankerungsöse aufweist. Die Verbindungseinheit ist als eine Achse ausgebildet, die in einer Vertiefung des Grundkörpers angeordnet ist.

Aus der WO 2006/131270 A1 ist eine Vorrichtung zum Verankern von Bändern oder dergleichen bekannt, bei der eine Verbindungsöse in einem wannenförmigen Gehäuse gegen Federkraft ausklappbar gelagert ist. Als Verbindungseinheit dient hier ebenfalls eine Achse.

Aufgabe der vorliegenden Erfindung ist es daher, eine Vorrichtung zum Verankern von Ladegütern oder dergleichen in Kraftfahrzeugen mit einer schwenkbaren Verankerungsöse derart weiterzubilden, dass der Herstell- und Montageaufwand weiter reduziert wird.

Zur Lösung dieser Aufgabe weist die Erfindung die Merkmale des Patentanspruchs 1 auf.

Der besondere Vorteil der Erfindung besteht darin, dass durch eine einstückige Ausbildung einer Verbindungseinheit der Herstellungs- und Montageaufwand wesentlich reduziert werden kann. Nach der Erfindung ist die Verankerungsöse in einem Lagerortbereich von der einen Seite von dem Grundkörper bereichsweise umfasst und von der gegenüberliegenden Seite her bereichsweise von der Verbindungseinheit umfasst, so dass eine sichere und klapperfreie Lagerung der Verankerungsöse gewährleistet ist. Da die erfindungsgemäße Vorrichtung lediglich drei Bauteile umfasst, ist die Montage derselben wesentlich vereinfacht. Vorteilhaft kann die erfindungsgemäße Vorrichtung bereits vormontiert an den Kraftfahrzeughersteller geliefert werden, so dass dieser lediglich beispielsweise mittels Verschraubung eine Fixierung der Verankerungsvorrichtung an einem Karosserieteil des Kraftfahrzeugs vornehmen muss. Erfindungsgemäß ist die Verbindungseinheit als eine Verbindungsplatte ausgebildet, die über Rastmittel verfügt zur rastenden Verbindung mit dem rahmenartigen Grundkörper. Nach Einsetzen der Verankerungsöse in den Grundkörper und nachfolgenden Anklipsen der Verbindungsplatte an den Grundkörper ist das Achselement der Verankerungsöse in der Montageposition festgelegt.

Nach einer bevorzugten Ausführungsform der Erfindung ist die Verankerungsöse von einer Unterseite des Grundkörpers her mittels der Verbindungseinheit klemmend und schwenkbar an dem Grundkörper gehalten. Vorzugsweise verfügt die Verbindungseinheit zum einen über Lagermittel für die Verankerungsöse und zum anderen über Verbindungsmittel für eine vorzugsweise lösbare Befestigung der Verbindungseinheit mit dem Grundkörper. Auf diese Weise ist gewährleistet, dass in der Montageposition der Vorrichtung ein zuverlässiges Verschwenken der Verankerungsöse um eine Drehachse gewährleistet ist. In der Verankerungsöse ist ein Achsenelement integriert angeordnet, das vorzugsweise an mindestens zwei Lagerorten jeweils zwischen einer Lagerschale des Grundkörpers und einer Lagerschale der Verbindungseinheit gelagert ist.

Nach einer Weiterbildung der Erfindung weist die Verbindungsplatte Rastmittel auf, derart, dass die Verankerungsöse in vorgegebenen unterschiedlichen Verstellpositionen (Rastpositionen) rastend festgelegt ist. Hierdurch kann die Handhabung der erfindungsgemäßen Vorrichtung vereinfacht werden.

Nach einer Weiterbildung der Erfindung ist die Lagerschale der Verbindungseinheit derart ausgebildet, dass die Verankerungsöse nur unter Aufwendung einer vorgegebenen Verstellkraft verschwenkbar ist. Hierzu ist die Verbindungsplatte derart vorgespannt ausgebildet, dass in der Montageposition eine axiale und/oder radiale Kraft (Haltekraft) auf das Achselement der Verankerungsöse ausgeübt wird, die es beim Verschwenken zu überwinden gilt. Das Achselement der Verankerungsöse ist demnach nicht mit Spiel zwischen Lagermitteln des Grundkörpers und der Verbindungseinheit gelagert, sondern es ist zum Verschwenken der Verankerungsöse stets eine relativ geringe Verstellkraft nötig, so dass der Benutzer beim Verschwenken der Verankerungsöse stets einen Widerstand spürt, der ein geschmeidiges Verschwenken begünstigt. Eine zum Verbringen oder Aufbringen der Verankerungsöse in bzw. aus einer Rastposition erforderliche Rastkraft ist vergleichsweise wesentlich höher.

Nach einer Weiterbildung der Erfindung ist dem Achselement der Verankerungsöse ein Anschlag zugeordnet, so dass die Verankerungsöse nur bis zu einem begrenzten Verschwenkwinkel verstellbar ist. Vorteilhaft kann hierdurch auf einfache Weise ein Überdrehschutz bereitgestellt werden, ohne dass zusätzliche Bauteile erforderlich sind.

Nach einer Weiterbildung der Erfindung sind die Verankerungsöse und der Grundkörper als ein Zinkdruckgießteil und die Verbindungseinheit als ein Spritzgießteil ausgebildet. Vorteilhaft sind diese drei Bauteile der Verankerungsvorrichtung derart ausgebildet, dass sie mittels Werkzeuge ohne Schieber/Seitenschieber hergestellt werden können. Auf diese Weise kann der Herstellungsaufwand weiter reduziert werden.

Ein Ausführungsbeispiel der Erfindung wird anhand der Zeichnungen näher erläutert.

Es zeigen:
- Figur 1: eine perspektivische Ansicht der erfindungsgemäßen Vorrichtung von oben in einer aufrechten Rastposition einer Verankerungsöse,
- Figur 2: eine perspektivische Ansicht der Vorrichtung von oben in einer versenkten Rastposition der Verankerungsöse,
- Figur 3: eine Explosionsdarstellung der Verankerungsvorrichtung mit den drei zusammensetzbaren Bauteilen,

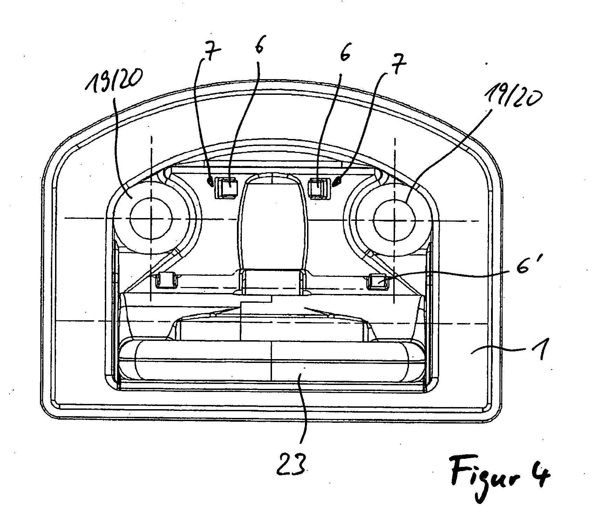

- Figur 4: eine Draufsicht auf die erfindungsgemäße Vorrichtung in der aufrechten Rastposition der Verankerungsöse gemäß Figur 1 und

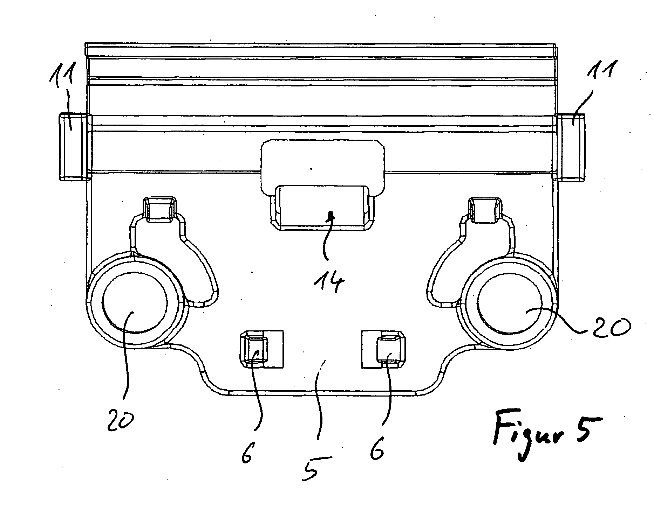

- Figur 5: eine Ansicht von unten der erfindungsgemäßen Vorrichtung.

Eine erfindungsgemäße Vorrichtung zum Verankern von Ladegütern, Bändern oder dergleichen in Kraftfahrzeugen findet insbesondere Einsatz in einem Kofferraum eines Kraftfahrzeuges.

Die erfindungsgemäße Vorrichtung besteht im Wesentlichen aus einem rahmenartigen Grundkörper 1, einer um eine horizontale Achse 2 verschwenkbare und in einer Vertiefung des rahmenförmigen Grundkörpers 1 gelagerten Verankerungsöse 3 und einer Verbindungseinheit 4.

Die Verbindungseinheit 4 ist einstückig als eine Verbindungsplatte ausgebildet, die zum einen über Rastmittel zum Befestigen der Verbindungseinheit 4 an dem Grundkörper 1 und zum Verbringen der Verankerungsöse 3 in mindestens eine Rastposition einerseits und zum anderen Lagermittel zum Lagern der Verankerungsöse 3 andererseits aufweist. Die Verbindungsplatte 4 weist als Rastmittel zwei beabstandet zueinander stirnseitig von einer Basisseite 5 der Verbindungsplatte 4 abragende erste Rastzapfen 6 auf, die in korrespondierende Öffnungen 7 des Grundkörpers 1 rastend eingreifen. Ferner weist die Verbindungsplatte 4 als Rastmittel in einem mittleren Bereich der Basisseite 5 abragende zweite Rastzapfen 6' auf, die in einer Montageposition, in der die Verankerungsöse 3 axial und radial gesichert an dem Grundkörper 1 angeordnet ist, an einem vorderen Rand 8 einer Ausnehmung 9 des Grundkörpers 1 klemmend anliegt. Durch die Rastzapfen 6, 6' ist die Verbindungsplatte 4 verliersicher und zumindest spielfrei in Erstreckungsrichtung der Verbindungsplatte 4 senkrecht zur horizontalen Schwenkachse 2 an dem Grundkörper 1 befestigt, wobei die Verankerungsöse 3 lediglich drehbar um die horizontale Schwenkachse 2 gelagert ist.

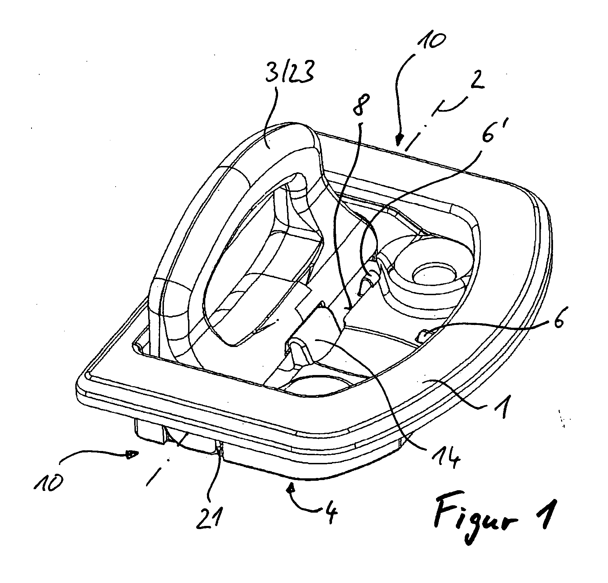

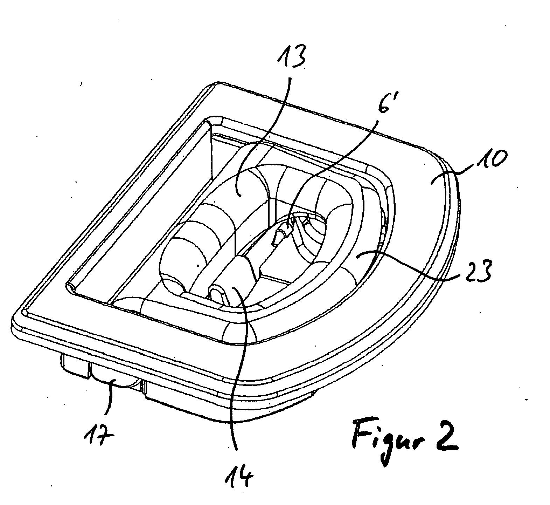

Die Lagermittel der Verbindungsplatte 4 sind an gegenüberliegenden Lagerorten 10 jeweils als eine Lagerschale 11 ausgebildet zur Aufnahme jeweils eines endseitigen Abschnitts 12 eines einstückig mit der Verankerungsöse 3 verbundenen Achselementes 13 derselben. Die Symmetrieachse des Achselementes 13 stimmt mit der horizontalen Schwenkachse 2 überein. Die Lagerschalen 11 sind jeweils halbkreisförmig ausgebildet und weisen einen solchen Abstand zueinander auf, der geringfügig kleiner ist als der Abstand der endseitigen Abschnitte 12 des Achselementes 13 zueinander, so dass das Achselement 13 der Verankerungsöse 3 in axialer und/oder radialer Richtung klemmend (unter einem Anpressdruck) gelagert ist. Zum Verbringen der Verankerungsöse 3 aus einer versenkten ersten Rastposition gemäß Figur 2 in eine aufrechte Rastposition gemäß Figur 1 ist daher stets eine relativ geringe Verstellkraft erforderlich. Der Benutzer spürt einen kleinen Kraftwiderstand beim Verschwenken, der sich förderlich bei der Handhabung der Verankerungsöse 3 im Sinne eines geschmeidigen Drehens auswirkt.

Die Verbindungsplatte 4 weist in einem mittleren Bereich eine federnde Rastnase 14 auf, die von der Basisseite 5 in gleicher Richtung wie die Rastzapfen 6, 6' abragt. Die Rastnase 14 ist senkrecht zur horizontalen Schwenkachse 2 hin federnd ausgebildet, so dass sie mit einem der horizontalen Achse 2 zugewandten freien Endbereich in einer aufrechten Rastposition der Verankerungsöse 3 in eine als Vertiefung ausgebildete Rastaufnahme 15 der Verankerungsöse 3 eingreift. Die Rastaufnahme 15 ist im Bereich des Achselementes 13 angeordnet. In der aufrechten Rastposition ist die Verankerungsöse 3 relativ zu dem Grundkörper 1 und der Verbindungsplatte 4 fixiert, so dass ein erleichtertes Ansetzen von Bändern, Schnallen, Lagegütern und dergleichen an der Verankerungsöse 3 ermöglicht wird. Zum Verbringen der Verankerungsöse 3 aus der Rastposition in eine weitere Rastposition ist eine Rastkraft erforderlich, die wesentlich größer ist als die stets bei der Verschwenkung der Verankerungsöse 3 wirkenden Verstellkraft.

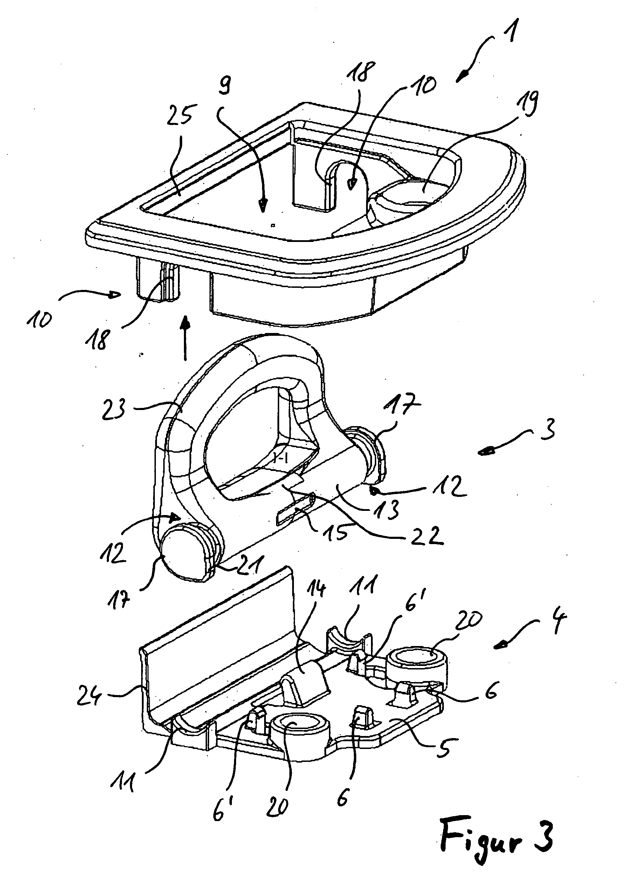

Anhand der Figur 3 wird im Folgenden die Montage der erfindungsgemäßen Verankerungsvorrichtung beschrieben. In einem ersten Schritt wird die Verankerungsöse 3 von einer Unterseite 16 des Grundkörpers 1 her durch die Ausnehmung 9 geführt, bis ein stirnseitig das Achselement 13 abschließender Bund 17 an einer Lagerschale 18 des Grundkörpers 1 zur Anlage kommt. Die Lagerschale 18 ist im Bereich des Lagerortes 10 angeordnet. Nachfolgend wird die Verbindungsplatte 4 von unten an eine Unterseite des Grundköpers 1 unter Eingreifen der Rastzapfen 6, 6' eingeklipst, wobei die Lagerschalen 11 der Verbindungsplatte 4 den endseitigen Abschnitt 12 des Achselementes 13 - wie oben beschrieben - klemmend umfassen und somit die Verankerungsöse 3 spielfrei und klemmend an dem Grundkörper 1 befestigt ist. Die Bauteile der Verankerungsvorrichtung befinden sich nun in der Montageposition. Die so gebildete Verankerungsvorrichtung kann nun beispielsweise einem Kraftfahrzeughersteller vormontiert bereitgestellt werden, so dass in einem weiteren Schritt lediglich durch eine Verschraubung die Verankerungsvorrichtung an einem Karosserieteil, beispielsweise im Kofferraum eines Kraftfahrzeugs, befestigt werden kann. Hierzu weist der Grundkörper 1 sowie die Verbindungsplatte 4 jeweils zwei zueinander fluchtende Bohrungen 19 bzw. 20 auf, durch die nicht dargestellte Schrauben eingreifen können zur Befestigung der Verankerungsvorrichtung (Baugruppe) an dem Karosserieteil. Auf einer den Rastzapfen 6 gegenüberliegenden Seite der Basisseite 5 der Verbindungsplatte 4 schließt sich ein abgewinkelter aufrechter Wandungsabschnitt 24 an, mittels derer die Verbindungsplatte 4 in der Montageposition an einem schmalseitigen Innenrand 25 des Grundkörpers 1 abgestützt ist.

Um ein Überdrehen der Verankerungsöse 3 zu verhindern, weist der Bund 17 des Achselementes 13 einen Anschlag 21 auf, der in der aufrechten Rastposition der Verankerungsöse 3 gegen die Lagerschale 18 des Grundkörpers 1 stößt und somit ein weiteres Verdrehen verhindert.

Gegebenenfalls kann das Achselement 13 auch eine Mehrzahl von Rastaufnahmen 15 aufweisen, die verteilt in Umfangsrichtung des Achselements 13 angeordnet sind, so dass die Verankerungsöse 3 eine Mehrzahl von Rastpositionen einnehmen kann. Der Schwenkbereich der Verankerungsöse 3 ist zwischen der versenkten Rastposition und der aufrechten Rastposition auf 90° beschränkt.

In der versenkten Rastposition liegt die Rastnase 14 rastend an einer Rastkante 22 des Achselementes 13 an.

Nach einer alternativen nicht dargestellten Ausführungsform können die Verankerungsöse 3 und die Verbindungsplatte 4 auch frei von Rastaufnahmen 15, Rastkanten 22 bzw. einer Rastnase 14 sein, so dass beim Verschwenken der Verankerungsöse 3 um die Schwenkachse 2 lediglich relativ niedrige Verstellkräfte erforderlich sind.

Der Grundkörper 1 und die Verankerungsöse 3 sind jeweils aus einem Zinkdruckgießteil hergestellt. Die Verbindungsplatte 4 ist aus einem Kunststoffmaterial als Spritzgießteil hergestellt. Die Gießteile 1, 3, 4 sind jeweils so ausgebildet, so dass für die Herstellung derselben keine Werkzeuge mit Schiebern, insbesondere mit Seitenschiebern, erforderlich sind. Hierdurch kann der Herstellungsaufwand neben dem Vorzug der geringen Anzahl von Bauteilen weiter verringert werden.

Die Verankerungsöse 3 weist neben dem Achselement 13 einen Bügel 23 auf, der mit dem Achselement 13 endseitig einstückig verbunden ist. Dadurch, dass die Verankerungsöse 3 um 90° verschwenkbar gelagert ist, können die Kräfte im Falle eines Zusammenstoßes des Kraftfahrzeugs in optimaler Richtung von dem Bügel 23 der Verankerungsöse 3 aufgenommen werden. Der Grundkörper 1 kann über die Verankerungsöse 3 die im Fall des Zusammenstoßes auftretenden Kräfte aufnehmen und das Ladegut sichern.

## Patentansprüche

1. Vorrichtung zum Verankern von Ladegütern, Bändern oder dergleichen in Kraftfahrzeugen, insbesondere in einem Kofferraum eines Kraftfahrzeugs, mit einem rahmenartigen Grundkörper (1), an dem eine Verankerungsöse (3) über eine einstückig ausgebildete Verbindungseinheit (4) schwenkbar gelagert ist, **dadurch gekennzeichnet, dass** die Verbindungseinheit (4) als eine Verbindungsplatte ausgebildet ist, von deren Basisseite (5) mindestens ein Rastzapfen (6) als Rastmittel abragt, der in der Montageposition in einer Öffnung (7) des Grundkörpers (1) rastend eingreift, und dass die Verankerungsöse (3) ein Achselement (13) aufweist, das an mindestens zwei Lagerorten (10) jeweils zwischen einer Lagerschale (18) des Grundkörpers (1) und einer Lagerschale (11) der Verbindungsplatte (4) gelagert ist.

2. Vorrichtung nach Anspruch 1, **dadurch gekennzeichnet, dass** die Verankerungsöse (3) von einer Unterseite (16) des Grundkörpers (1) her mittels der Verbindungsplatte (4) klemmend mit dem Grundkörper (1) verbunden ist.

3. Vorrichtung nach Anspruch 1 oder 2, **dadurch gekennzeichnet, dass** die Verbindungsplatte (4) über Rastmittel (6, 6', 14) verfügt, derart, dass die Verbindungseinheit (4) in der Montageposition mit dem Grundkörper (1) dauernd in einer einzigen Montageposition und mit der Verankerungsöse (3) in Abhängigkeit von der Rastposition derselben zeitweise in mindestens einer Rastposition verbunden ist.

4. Vorrichtung nach einem der Ansprüche 1 bis 3, **dadurch gekennzeichnet, dass** von der Basisseite (5) der Verankerungsplatte (4) mindestens eine Rastnase (14) als Rastmittel abragt, die mit einer Rastaufnahme (15) der Verankerungsöse (3) zusammenwirkt zur Fixierung der Verankerungsöse (3) in einer vorgegebenen Rastposition.

5. Vorrichtung nach einem der Ansprüche 1 bis 4, **dadurch gekennzeichnet, dass** die Lagerschale (11) der Verbindungsplatte (4) und die Lagerschale (18) des Grundkörpers (1) derart ausgebildet ist, dass die Verankerungsöse (3) nur unter Aufwendung einer vorgegebenen Verstellkraft verschwenkbar ist.

6. Vorrichtung nach einem der Ansprüche 1 bis 5, **dadurch gekennzeichnet, dass** die Lagerschale (11) der Verbindungsplatte (4) derart vorgespannt ausgebildet ist, dass die Verankerungsöse (3) in der Montageposition in axialer und radialer Richtung mit einem vorgegebenen Anpressdruck eingespannt ist.

7. Vorrichtung nach einem der Ansprüche 1 bis 6, **dadurch gekennzeichnet, dass** das Achselement (13) der Verankerungsöse (3) an mindestens einem stirnseitigen Ende einen mit der Lagerschale (18) des Grundkörpers (1) zusammenwirkenden Anschlag (21) aufweist, derart, dass die Verankerungsöse (3) nur bis zu einem vorgegebenen Schwenkwinkel verschwenkbar angeordnet ist.

8. Vorrichtung nach einem der Ansprüche 1 bis 7, **dadurch gekennzeichnet, dass** die Verankerungsöse (3) und der Grundkörper (1) als ein Zinkdruckgießteil und die Verbindungsplatte (4) als ein aus einem Kunststoff bestehendes Spritzgießteil ausgebildet sind.

## Claims

1. Device for securing loads, straps or such like in vehicles, particularly in the trunk of a motor vehicle, comprising a frame-shaped basic body (1) on which an anchoring lug (3) is pivotally arranged via a one-piece connector unit (4), **characterized by** the fact that the connector unit (4) is in the form of a connector plate from the base (5) of which at least one snap type stud (6) protrudes to serve as a locking member which when fitted in place is snapped into an opening (7) of said basic body (1), and that the anchoring lug (3) comprises an axle element (13) that is supported in at least two places (10) between a bearing shell (18) on said basis body (1) and a bearing shell (11) on said connector plate (4).,

2. Device according to Claim 1, **characterized by** the fact that the anchoring lug (3) is in a clamped connection with the basic body (1) from an underside (16) thereof with the aid of said connector plate (4).

3. Device according to Claim 1 or 2, **characterized by** the fact that the connector plate (4) is provided with locking members (6, 6', 14) such that while in mounted position said connector unit (4) is joined to the basic body (1) permanently in just one mounting position and to the anchoring lug (3) at times in at least one locking position dependent of the specific locking position thereof.

4. Device according to any of the preceding Claims 1 to 3, **characterized by** the fact that at least one snap nose (14) protrudes from the base (5) of the anchoring or connector plate (4) and coacts with a receiving member (15) of the anchoring lug (3) to retain said latter in a predetermined locked position.

5. Device according to any of the preceding Claims 1 to 4, **characterized by** the fact that the bearing shell (11) on the connector plate (4) and the bearing shell (14) on the basic body (1) are of such design that the anchoring lug (3) can be pivoted only by exerting a predetermined force.

6. Device according to any of the preceding Claims 1 to 5, **characterized by** the fact that the bearing shell (11) of the connector plate (4) is prestressed in a way ensuring that while in mounted position the anchoring lug (3) is both axially and radially retained under the action of a predetermined contact pressure.

7. Device according to any of the preceding Claims 1 to 6, **characterized by** the fact that on one face end at least the axle element (13) of the anchoring lug (3) is provided with a stop member (21) that coacts with the bearing shell (18) on the basic body (1) in such a way that said anchoring lug (3) can be tilted up to a predetermined swivel angle only.

8. Device according to any of the preceding Claims 1 to 8, **characterized by** the fact that anchoring lug (3) and basic body (1) are provided in the form of zinc pressure die castings and the connector plate (4) is an injection molded plastic component.

## Revendications

1. Dispositif pour l'immobilisation de chargements, de sangles ou analogues, dans des véhicules automobiles, en particulier dans un coffre d'un véhicule automobile, avec un corps de base (1) genre cadre auquel un anneau de retenue (3) est monté en pivotement, par l'intermédiaire d'une unité de jonction (4), qui est formée d'une pièce, **caractérisé en ce que** l'unité de jonction (4) est conçue en tant que plaque de jonction, sur le côté de base (5) de laquelle fait saillie, en tant que moyen d'encliquetage, une broche d'encliquetage (6), qui, dans la position de montage, s'encliquète dans une ouverture (7) du corps de base (1),et **en ce que** l'anneau de retenue (3) présente un élément d'axe (13), qui est monté au moins à deux endroits de montage (10), respectivement entre une coquille de support (18) du corps de base (1) et une coquille de support (11) de la plaque de jonction (4).

2. Dispositif selon la revendication 1, **caractérisé en ce que** l'anneau de retenue (3) est relié, par serrage, au corps de base (1), à partir d'un côté inférieur (16) dudit corps de base (1), au moyen de la plaque de jonction (4).

3. Dispositif selon revendication 1 ou 2, **caractérisé en ce que** la plaque de jonction (4) dispose de moyens d'encliquetage (6, 6', 14) de sorte que l'unité de jonction (4), en position de montage, est reliée de manière permanente au corps de base (1) dans une unique position de montage, et est reliée temporairement à l'anneau de retenue (3), en fonction de la position d'encliquetage de celui-ci, dans au moins une position d'encliquetage.

4. Dispositif selon l'une des revendications 1 à 3, **caractérisé en ce que** sur le côté de base (5) de la plaque de jonction (4) fait saillie, en tant que moyen d'encliquetage, au moins un nez d'encliquetage (14), qui coopère avec un logement d'encliquetage (15) de l'anneau de retenue (3), pour fixer ledit anneau de retenue (3) dans une position d'encliquetage prédéterminée.

5. Dispositif selon l'une des revendications 1 à 4, **caractérisé en ce que** la coquille de support (11) de la plaque de jonction (4) et la coquille de support (18) du corps de base (1) sont configurées de sorte que l'anneau de retenue (3) ne puisse pivoter que sous l'application d'une force de déplacement prédéterminée.

6. Dispositif selon l'une des revendications 1 à 5, **caractérisé en ce que** la coquille de support (11) de la plaque de jonction (4) est précontrainte de sorte que l'anneau de retenue (3), dans la position de montage, soit maintenu, serré, en direction axiale et radiale avec une pression prédéterminée.

7. Dispositif selon l'une des revendications 1 à 6, **caractérisé en ce que** l'élément d'axe (13) de l'anneau de retenue (3) présente, à au moins une extrémité frontale, une butée (21), qui coopère avec la coquille de support (18) du corps de base (1), de sorte que l'anneau de retenue (3) ne puisse pivoter que jusque d'un angle de pivotement prédéterminé.

8. Dispositif selon l'une des revendications 1 à 7, **caractérisé en ce que** l'anneau de retenue (3) et le corps de base (1) sont réalisés sous la forme d'une pièce en zinc moulé sous pression et que la plaque de jonction (4) est réalisée sous la forme d'une pièce en matière plastique moulée par injection.
